(19) **Europäisches Patentamt**

**European Patent Office**

**Office européen des brevets**

(11) **EP 1 184 858 A2**

(12) **EUROPEAN PATENT APPLICATION**

(43) Date of publication:
**06.03.2002 Bulletin 2002/10**

(51) Int Cl.⁷: **G11B 7/24**, G11B 7/00

(21) Application number: **01126016.3**

(22) Date of filing: **26.01.1996**

(84) Designated Contracting States:
**DE FR GB NL**

(30) Priority: **27.01.1995 JP 1135395**

(62) Document number(s) of the earlier application(s) in accordance with Art. 76 EPC:
**96101137.6 / 0 724 259**

(71) Applicant: **NEC CORPORATION**
**Tokyo (JP)**

(72) Inventors:
• **Okada, Mitsuya**
  **Minato-ku, Tokyo (JP)**
• **Itoh, Masaki**
  **Minato-ku, Tokyo (JP)**

(74) Representative: **Baronetzky, Klaus, Dipl.-Ing.**
**Splanemann Reitzner Baronetzky Westendorp**
**Patentanwälte Rumfordstrasse 7**
**80469 München (DE)**

Remarks:
This application was filed on 31.10.2001 as a divisional application to the application mentioned under INID code 62.

(54) **Optical information recording medium and method for optical recording, reproducing and erasing information**

(57) Disclosed is an optical information recording medium which has: a rigid substrate; recording film for recording information that is optically detected by laser light, the recording film being formed on the rigid substrate or concave-convex pits for recording information that is optically detected, the concave-convex pits being formed on the rigid substrate; and a transparent thin plate and the recording film being pasted together by a transparent adhesive layer. Also disclosed is a method for optically recording, reproducing and erasing information which has the step of: providing an optical information recording medium in which a recording member that is physically or chemically changed by the incidence of laser light is formed on a rigid substrate; wherein the recording, reproducing and erasing of information is conducted through the recording member by laser light which incides on the rigid substrate through a transparent thin plate formed on the rigid substrate.

*FIG.3*

EP 1 184 858 A2

## Description

FIELD OF THE INVENTION

This invention relates to an optical information recording medium and a method for optical recording, reproducing and erasing information.

BACKGROUND OF THE INVENTION

An optical disk recording manner with laser light can record a very large amount of information and can do high-speed access without contacting. Therefore, it has been utilized as a large-capacity storage. An optical disk can be classified into a read-only type known as a compact disk and laser disk, a writable type in which an user can record information and a rewritable type in which an user can repeatedly record and erase information.

The writable and rewritable type optical disks are used as an external memory for a computer or a document and image file storage. The read-only type optical disk is used as a data file like CD-ROM or a personal high-density recording medium. From the large capacity of CD-ROM, an application as a multimedia file including image data with image compression technique is researched. In this use, the memory capacity of 650 MB/disk is not sufficient, and to enhance four times the capacitance is desired. A read-only image file like a laser disk also needs high-density recording capacity.

The writable type optical disk has a merit that recorded information is stably stored and has obtained a constant market. It also needs high-density recording capacity.

The rewritable type optical disk includes a phase change optical disk and a magneto-optical disk. The phase change optical disk does not need an external magnetic field and can be easily overwritten. The phase change optical disk and magneto-optical disk also needs high-density recording capacity.

In the read-only optical disk, concave-convex pits are previously formed on a substrate by the injection molding, and metal reflecting film made of aluminum alloys is formed on the concave-convex pits. In the writable optical disk, an alloy material including a low melting point metal such as Te, Bi, Se, Sn or a coloring matter with absorption characteristics in the wavelength area of laser light is formed on a substrate.

In the magneto-optical disk, alloy thin film which comprises a rare earth metal such as Tb, Gd, Dy, Ho and a transition metal such as Fe, Co, Ni is sandwiched by transparent protecting films such as SiN. In the phase change optical disk, thin film of chalcogenides such as GeSbTe, InSbTe is used as recording film. The other recording film for the phase change optical disk includes InSe, InTe, AsTeGe, TeOx-GeSn, TeSeSn, Sb-SeBi, BiSeGe etc. The thin film listed above is formed by film formation methods such as the thermal vacuum deposition, the electron beam vacuum deposition, the sputtering, or spin coating.

In the read-only type, writable type and rewritable type optical disk, the recording film or concave-convex pits are formed on a transparent resin or glass substrate with a thickness of about 1.2 mm. The recording, reproducing and erasing of information are conducted through the substrate. Herein, the manner in which focused laser light for the recording, reproducing and erasing is incided through the substrate has a advantage that the intensity of the laser light is not so affected by stain or flaw on the surface of a substrate since the laser light is spread thereat.

To enhance the recording capacity of an optical disk, the numerical aperture (hereinafter referred to as "N.A.") of a lens for focusing laser light should be large. Because, the focused diameter w in laser light focused by a lens is determined by the equation:

$$w = 1.22 \text{ lambda } / \text{ N.A.}$$

wherein lambda represents a wavelength of laser light. Namely, the larger N.A. is the smaller the beam diameter is. However, when N.A. is increased, the distance between a focusing lens and a focus position becomes shorter. Therefore, when the thickness of a substrate is determined, for example, 1.2 mm, N.A. of the focusing lens is thereby limited.

T. Ohta et al.,"Thin injection molded substrate for high density recording phase change rewritable optical disk", Th3.3, p.67, ISOM/ODS93 Conference digest suggests a technique in which the thickness of a substrate is decreased to about 0.6 mm when a focusing lens with a high N.A. is used.

However, a thin substrate in the above technique has a problem that when the diameter of the substrate is larger, it is difficult for it to maintain mechanical properties. Furthermore, in the example of a magneto-optical disk, birefringence caused by using a thin substrate of synthetic resin tends to lead to noise.

Japanese patent application laid-open No. 4-53039 discloses an optical information recording medium in which a substrate is provided with a rigidity. Herein, a reinforcing plate is disposed between two thin substrates. However, when the diameter of the thin substrate becomes large, mechanical and optical uniformity is severely required. Furthermore, in the example of a magneto-optical disk, birefringence caused by using a thin substrate of synthetic resin tends to lead to noise.

Document US-A-5 276 674 discloses an optical recording medium including a substrate, a recording layer formed on the substrate, and a transparent protective layer applied onto the recording layer.

Document JP-A-57 066 538 (abstract) discloses an information storage medium comprising a substrate, an information recording layer, a protective layer, an adhesive layer and a thick transparent plate.

Document EP-A-0 326 342 discloses an information recording medium to be produced by cast or compression molding, comprising a substrate having an uneven preformatted surface, onto which a recording layer is disposed and then a protective substrate is bonded by means of an adhesive layer.

Document EP-A-0 613 127 discloses a double-sided optical information recording medium comprising a single substrate having grooves or pits arranged in spiral or concentric circles, a reflecting layer, and a super thin film protective layer and relates in particular to hybrid optical storage media having outer side multi-layer M-O-structures.

Document EP-A-0 605 125 discloses an optical information recording medium having a super thin film protective coating.

SUMMARY OF THE INVENTION

Accordingly, it is an object of the invention to provide an optical information recording medium in which high-density recording can be realized while a sufficient rigidity is therof is maintained.

According to the present invention, this object is accomplished by an optical information recording medium as defined in independent claim 1.

Advantageous further developments of the invention are subject of the accomanying dependent claims.

BRIEF DESCRIPTION OF THE DRAWINGS

The invention will be explained in more detail in conjunction with the appended drawings, wherein:

FIG. 1 is a cross sectional view showing a conventional optical information recording medium,
FIG. 2 is a cross sectional view showing another conventional optical information recording medium,
FIG. 3 is a cross sectional view showing an optical information recording medium in a first preferred embodiment according to the invention,
FIG. 4 is a cross sectional view showing an optical information recording medium in a second preferred embodiment according to the invention,
FIG. 5 is a perspective cross sectional view showingan optical information recording medium in a third preferred embodiment according to the invention,
FIG. 6 is a perspective cross sectional view showingan optical information recording medium in a fourth preferred embodiment according to the invention,
FIG. 7 is a cross sectional view showing an optical information recording medium in a fifth preferred embodiment according to the invention,
FIG. 8 is a cross sectional view showing an optical information recording medium in a sixth preferred embodiment according to the invention,
FIG. 9 is a cross sectional view showing an optical information recording medium in a seventh preferred embodiment according to the invention,
FIG. 10 is a cross sectional view showing an optical information recording medium in an eighth preferred embodiment according to the invention,
FIG. 11 is a perspective cross sectional view showing an optical information recording medium in a ninth preferred embodiment according to the invention,
FIG. 12 is a perspective cross sectional view showing an optical information recording medium in a tenth preferred embodiment according to the invention,
FIG. 13 is a perspective cross sectional view showing an optical information recording medium in an eleventh preferred embodiment according to the invention, and
FIG. 14 is a perspective cross sectional view showing an optical information recording medium in a twelfth preferred embodiment according to the invention.

DESCRIPTION OF THE PREFERRED EMBODIMENTS

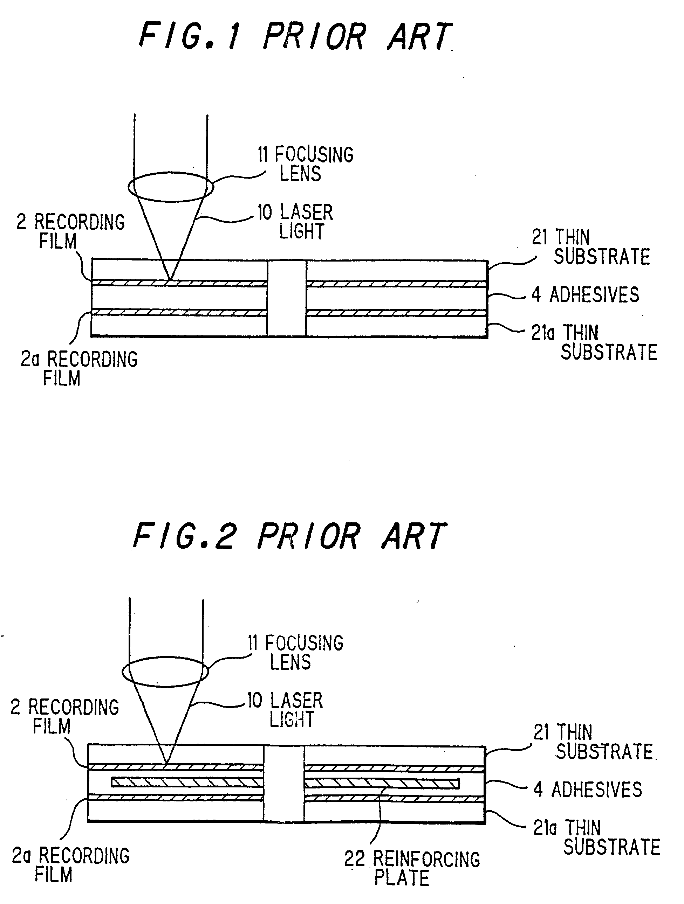

Before explaining an optical information recording medium in the preferred embodiment, the aforementioned conventional optical information recording media will be explained in FIGS. 1 and 2.

As shown in FIG. 1, one of the conventional optical information recording medium comprises thin substrates 21, 21a which have recording film 2, 2a, respectively thereon and are pasted together by adhesives 4. Laser light 10 incides on the recording film 2 or 2a through the thin substrate 21 or 21a with being focused by a focusing lens 11.

In FIG. 2, another conventional optical information recording medium is shown. The optical information recording medium comprises thin substrates 21, 21a which have recording film 2, 2a, respectively thereon and are pasted together. Herein, a reinforcing plate 22 is disposed between the two substrates 21, 21a.

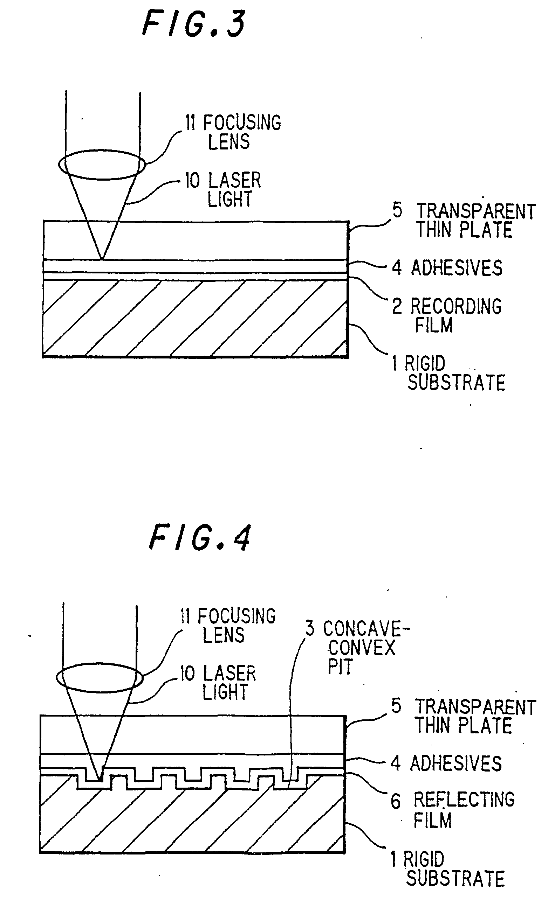

Next, an optical information recording medium in preferred embodiments according to the invention will be explained in FIGS. 3 to 14, wherein like parts are indicated by like reference numerals as used in FIGS. 1 and 2.

As shown in FIG. 3, an optical information recording medium in the first preferred embodiment comprises a rigid substrate 1 which has a sufficient rigidity, recording film 2 formed on the rigid substrate 1 and a transparent thin plate 5 formed on the recording film 2 through adhesives 4. Laser light 10 is focused by a focusing lens 11 and is incided on the recording film 2 through the transparent thin plate 5.

The rigid substrate 1 may be a transparent resin substrate or glass substrate which is used for an optical disk with a thickness of 1.2 mm. The rigid substrate 1 need not be transparent in the wavelength area of laser light used and may be a metal plate, an opaque resin plate, a ceramic plate and the like. If the rigidity of a disk is obtained, the thickness of the rigid substrate 1 does not depend on the design values of a focusing lens in an optical disk head and can be other than 1.2 mm.

The transparent thin plate 5 may be a glass plate, a resin plate or the like. The thickness of the transparent thin plate 5 depends on the design values of a focusing lens in an optical disk head used. Since N.A. (numerical aperture) of the focusing lens is increased to achieve high-density recording, the thickness of the transparent thin plate 5 is less than 1.2 mm. The material thereof may be a transparent glass plate or resin plate.

As shown in FIG. 4, an optical information recording medium in the second preferred embodiment, which is so-called read-only memory (ROM) type, comprises, in particular, concave-convex pits 3 previously formed on a rigid substrate 1 and reflecting film 6 formed on the concave-convex pits 3. The other components are similar to those in FIG. 3.

In the first and second embodiment as shown in FIGS. 3 and 4, the whole surfaces of the transparent thin plate 5 and rigid substrate 1 are pasted together by transparent adhesives 4. In this case, since the laser light 10 for recording, reproducing and erasing needs to be transmitted through the adhesives 4, the adhesives 4 should be optically transparent and have high uniformity. The adhesives 4 are applied to either or both of the rigid substrate 1 and transparent thin plate 5 to paste together them.

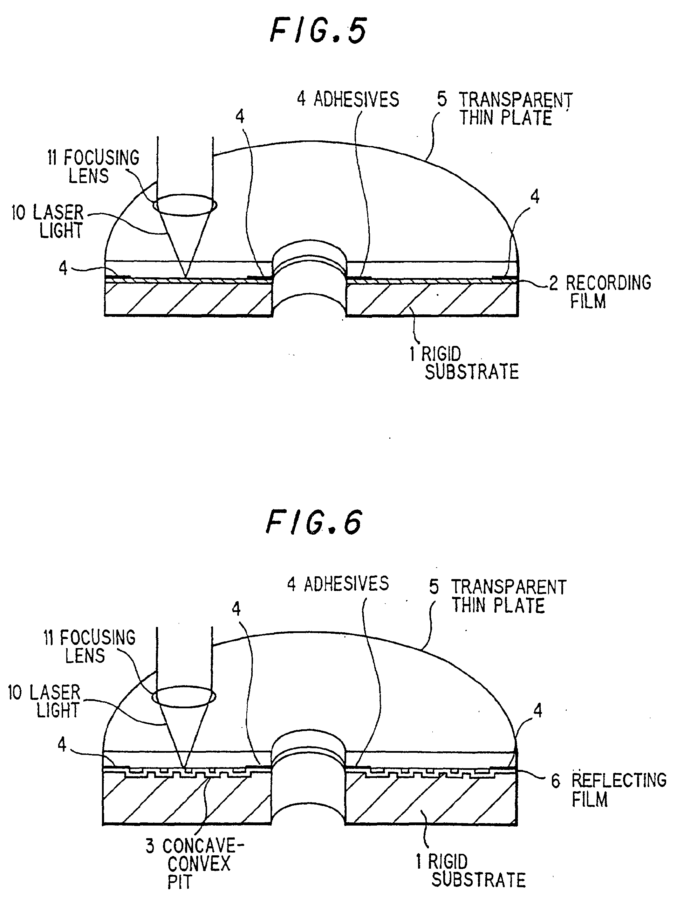

Alternatively, in the third and fourth embodiments as shown in FIGS. 5 and 6, adhesives 4 may be applied to only inner and outer circumference portions of the rigid substrate 1 and transparent thin plate 5 to paste together them. In these embodiments, both the overall surfaces of the rigid substrate 1 and transparent thin plate 5 are closely in contact with each other. Herein, in the third embodiment in FIG. 5, recording film 2 is formed and the adhesives 4 are applied to the inner and outer circumference portions which are not used for recording, reproducing and erasing. In the fourth embodiment in FIG. 6, concave-convex pits 3 are previously formed and reflecting film 6 is formed thereon, and the adhesives 4 are applied to the inner and outer circumference portions which are not used for recording, reproducing and erasing.

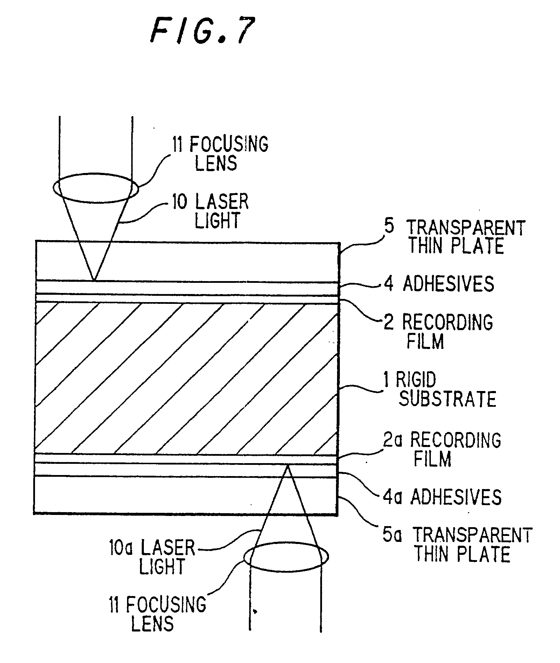

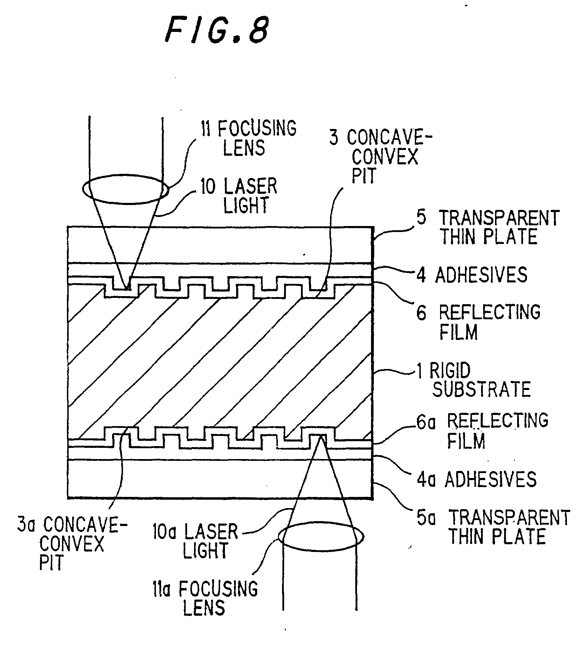

In the fifth and sixth embodiments as shown in Figs. 7 and 8, recording film 2 or concave-convex pits 3 can be provided on both surfaces of a rigid substrate 1. In the fifth embodiment in FIG. 7, recording films 2, 2a are formed on both surfaces of the rigid substrate 1 and transparent thin plates 5, 5a are formed on the recording films 2, 2a through adhesives 4, 4a. In the sixth embodiment in FIG. 8, concave-convex pits 3, 3a are previously formed and reflecting films 6, 6a are formed thereon, and transparent thin plates 5, 5a are zormed on the recording films 2, 2a through adhesives 4, 4a.

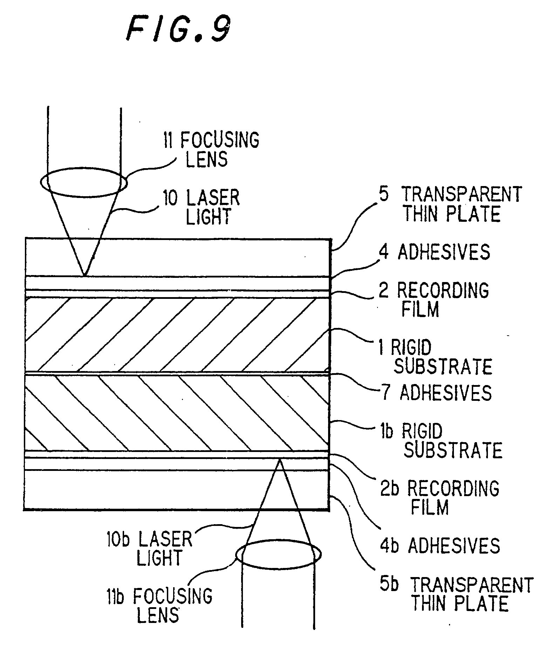

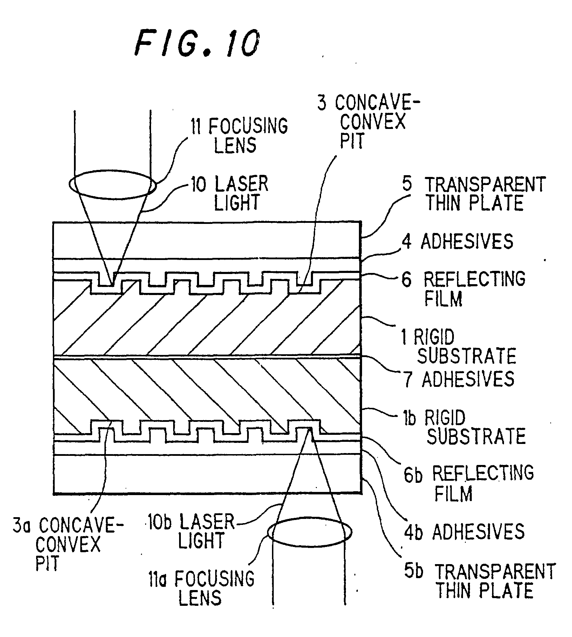

In the seventh and eighth embodiments as shown in FIGS. 9 and 10, a pair of optical information recording media as fabricated in the first to fourth embodiments can be pasted together. In the seventh embodiment in FIG. 9, two optical information recording media as shown in FIG. 3 are pasted together, where rigid substrates 1 and 1b are pasted one another through adhesives 7. Recording films 2, 2b are formed on the rigid substrates 1, 1b, respectively and transparent thin plates 5, 5b are formed on the recording films 2, 2b, respectively through adhesives 4, 4b.

Similarly, in the eighth embodiment in FIG. 10, two optical information recording media as shown in FIG. 4 are pasted together, where rigid substrates 1 and 1b are pasted one another through adhesives 7. Concave-convex pits 3, 3b and reflecting film 6, 6b are formed on the rigid substrates 1, 1b, respectively and transparent thin plates 5, 5b are formed on the reflecting films 6, 6b, respectively through adhesives 4, 4b.

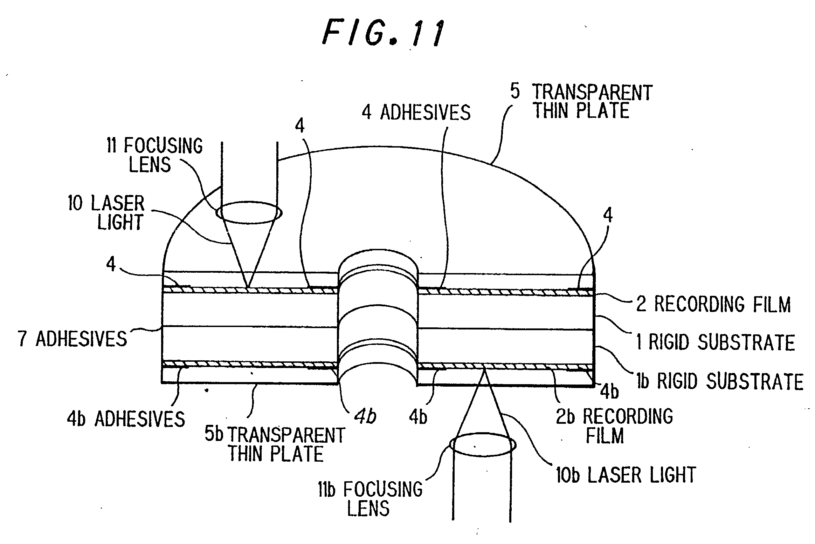

Furthermore, in the ninth embodiment in FIG. 11, two optical information recording media as shown in FIG. 5 are pasted together, where rigid substrates 1 and 1b are pasted one another through adhesives 7. Recording films 2, 2b are formed on the rigid substrates 1, 1b, respectively and transparent thin plates 5, 5b are pasted on the recording films 2, 2b, respectively through adhesives 4, 4b which are applied to only the inner and outer circumference portions of the recording films 2, 2b, respectively.

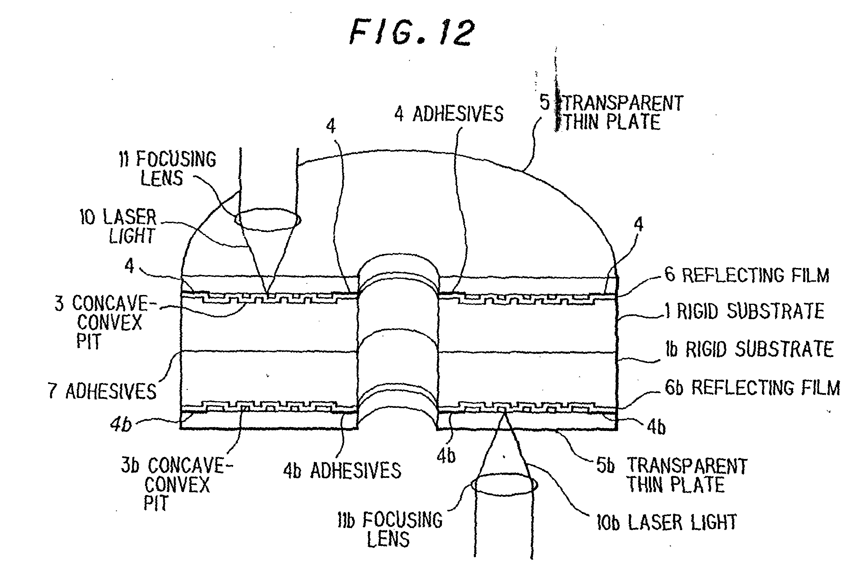

In the tenth embodiment in FIG. 12, two optical information recording media as shown in FIG. 6 are pasted together, where rigid substrates 1 and 1b are pasted one another through adhesives 7. Concave-convex pits 3, 3b and reflecting film 6, 6b are formed on the rigid substrates 1, 1b, respectively and transparent thin plates 5, 5b are pasted on the reflecting films 6, 6b, respectively through adhesives 4, 4b which are applied to only the inner and outer circumference portions of the reflecting films 6, 6b, respectively.

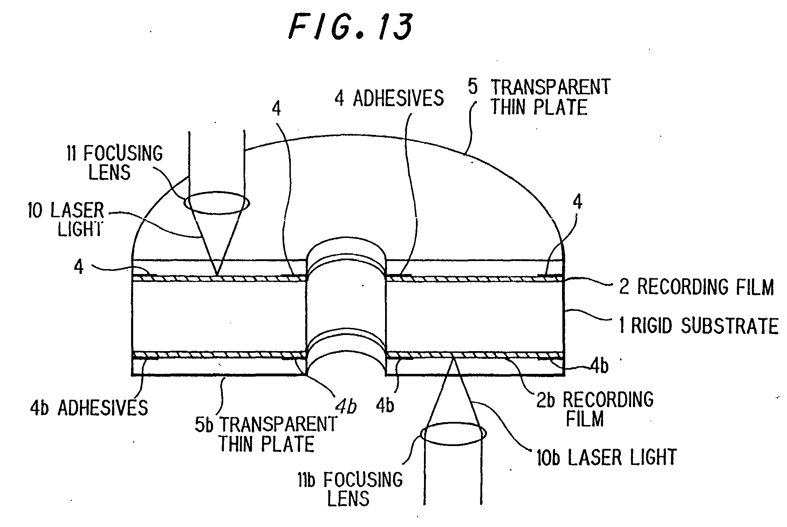

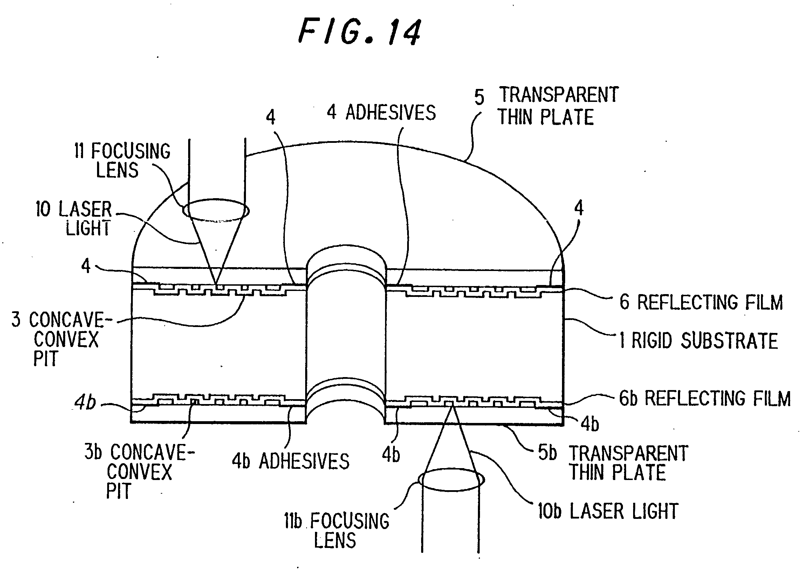

Furthermore, in the eleventh and twelfth embodiments as shown in FIGS. 13 and 14, a disklike rigid substrate 1 can be pasted with transparent thin plates 5, 5b through adhesives 4, 4a which are applied to only the inner and outer circumference portions of recording films 2, 2b or reflecting films 6, 6b, respectively. Herein, the surface of the rigid substrate 1 is closely contact with the surfaces of the transparent thin plates 5, 5b.

As explained in the above embodiments, an optical information recording medium according to the invention can significantly decrease the thickness of an incident layer thereof for laser light with keeping a rigidity. Therefore, a focusing lens with high N.A. can be easily adapted to provide high-density recording.

Examples 1 to 16 for further explaining the above embodiments will be described below.

[Example 1]

An optical information recording medium according to the invention is fabricated as below. By an original disk manufacturing device in which an ultraviolet laser light source is mounted, concave-convex pits with a track pitch of 0.8 µm and a minimum mark length of 0.25 µm are formed on an original disk. EFM modulation signals for a compact disk (CD) are used. After a stamper is formed through the original disk, a disklike substrate (outer diameter:120 mm) which is made of polycarbonate and on which concave-convex pits has been transferred is made by the injection molding. The thickness of the substrate is 1.2 mm.
Thereafter, aluminum alloy thin film with a thickness of 100 nm is formed on the substrate by the sputtering method. Then, ultraviolet curing resin adhesives are applied 5 µm to the aluminum alloy thin film, and a glass transparent thin plate with a thickness of 0.6 mm is pasted thereon to provide an optical information recording medium as shown in FIG. 4.
When the information in the optical information recording medium is reproduced through the transparent thin plate by an optical head with a wavelength of 680 nm and focusing lens N.A. of 0.6, reproducing signals with low jitter component are obtained.

[Example 2]

The two optical information recording media fabricated in Example 1 are prepared, and their bottom surfaces with no concave-convex pits are pasted together by adhesives to provide an optical information recording medium in FIG. 10.
When the information in the optical information recording medium is reproduced through the transparent thin plate by an optical head with a wavelength of 680 nm and focusing lens N.A. of 0.6, reproducing signals with low jitter component are obtained at both sides with stable servo-characteristics.

[Example 3]

By an original disk manufacturing device in which an ultraviolet laser light source is mounted, concave-convex pits with a track pitch of 0.8 µm and a minimum mark length of 0.25 µm are formed on a glass original disk. EFM modulation signals for a compact disk (CD) are used. Then, by etching, concave-convex pits with a track pitch of 0.8 µm and a minimum mark length of 0.25 µm are formed on the surface of the glass original disk to provide a glass original disk stamper. Then, through the glass original disk stamper, the concave-convex pits are transferred on a glass substrate (diameter:120mm, thickness:1.2mm) by the photopolymer method (2P method). Thereafter, aluminum alloy thin film with a thickness of 200 nm is formed on the disk substrate by the sputtering method. Further, ultraviolet curing resin adhesives are applied 5 µm to the aluminum alloy thin film, and a glass transparent thin plate with a thickness of 0.6 mm is pasted thereon to provide an optical information recording medium as shown in FIG. 4.
When the information in the optical information recording medium is reproduced trough the transparent thin plate by an optical head with a wavelength of 680 nm and focusing lens N.A. of 0.6, reproducing signals with low jitter component are obtained at both sides with stable servo-characteristics.

[Example 4]

The two optical information recording media fabricated in Example 3 are prepared, and their bottom surfaces with no concave-convex pits are pasted together by adhesives to provide an optical information recording medium in FIG. 10. When the information in the optical information recording medium is reproduced through the transparent thin plate by an optical head with a wavelength of 680 nm and focusing lens N.A. of 0.6, reproducing signals with low jitter component are obtained at both sides with stable servo-characteristics.

[Example 5]

By an original disk manufacturing device in which an ultraviolet laser light source is mounted, concave-convex pits with a track pitch of 0.8 µm and a minimum mark length of 0.25 µm are formed on a glass original disk. EFM modulation signals for a compact disk (CD) are used. Then, by etching, concave-convex pits with a track pitch of 0.8 µm and a minimum mark length of 0.25 µm are formed on the surface of the glass original disk to provide a glass original disk stamper.
Then, through the glass original disk stamper, the concave-convex pits are transferred on a glass substrate (diameter:120mm, thickness:1.2mm) by the photopolymer method (2P method).
Thereafter, aluminum alloy thin film with a thickness of 100 nm is formed on the disk substrate by the sputtering method.
Thereafter, through a glass original disk stamper with concave-convex pits corresponding to another information which is similarly formed, the concave-convex pits are transferred onto the other surface of the glass substrate by the photopolymer method (2P method). Also, aluminum alloy thin film with a thickness of 100 nm is formed on the disk substrate by the sputtering method.
Further, ultraviolet curing resin adhesives are applied 5 µm to the aluminum alloy thin film, and a glass transparent thin plate with a thickness of 0.6 mm are pasted thereon to provide an optical information recording medium as shown in FIG. 8.
When the information in the optical information recording medium is reproduced through the transparent thin plate by an optical head with a wavelength of 680 nm and focusing lens N.A. of 0.6, reproducing signals with low jitter component are obtained at both sides with stable servo-characteristics.

[Example 6]

By an original disk manufacturing device in which an ultraviolet laser light source is mounted, a spiral groove with a track pitch of 0.8 $\mu$m and a groove width of 0.4 $\mu$m are formed on a glass original disk. After a stamper is made by the nickel-plating method through the original disk, a disk substrate (outer diameter:130 mm) on which the spiral groove is transferred by the photopolymer method (2P method) is formed. The thickness of the disk substrate is 1.2 mm.

Then, aluminum alloy reflecting film with a thickness of 120 nm, SiN first protecting film with a thickness of 25 nm, TbFeCo magneto-optical recording film with a thickness of 20 nm and SiN second protecting film with a thickness of 120 nm are formed on the disk substrate by the sputtering method.

Further, ultraviolet curing resin adhesives are applied 3 $\mu$m onto the SiN second protecting film, and a glass transparent thin plate with a thickness of 0.6 mm are pasted thereon to provide an optical information recording medium as shown in FIG. 3.

When, in the optical information recording medium, information is recorded and reproduced by a magneto-optical head with a wavelength of 680 nm and focusing lens N.A. of 0.6, reproducing signals of a recording mark length of 0.5 $\mu$m at the shortest are obtained with low jitter.

[Example 7]

The two optical information recording media fabricated in Example 6 are prepared, and their bottom surfaces with no recording film are pasted together by adhesives to provide an optical information recording medium in FIG. 9.

When, in the optical information recording medium, information is recorded and reproduced through the transparent thin plate by a magneto-optical head with a wavelength of 680 nm and focusing lens N.A. of 0.6, reproducing signals of a recording mark length of 0.5 $\mu$m at the shortest are obtained with low jitter at both sides with stable servo-characteristics.

[Example 8]

By an original disk manufacturing device in which an ultraviolet laser light source is mounted, a spiral groove with a track pitch of 0.8 $\mu$m and a groove width of 0.4 $\mu$m are formed on a glass original disk. By etching, a spiral groove is with a track pitch of 0.8 $\mu$m and a groove width of 0.4 $\mu$m are formed on the surface of the glass original disk to provide a stamper. Through the stamper, the spiral groove is transferred onto a glass substrate (diameter:130 mm, thickness:1.2 mm) by the photopolymer method (2P method). Then, aluminum alloy reflecting film with a thickness of 120 nm, SiN first protecting film with a thickness of 25 nm, TbFeCo magneto-optical recording film with a thickness of 20 nm and SiN second protecting film with a thickness of 120 nm are formed on the disk substrate by the sputtering method. Thereafter, through a glass original disk stamper, a spiral groove is transferred onto the other surface of the glass substrate by the photopolymer method (2P method). Also, aluminum alloy reflecting film with a thickness of 120 nm, SiN first protecting film with a thickness of 25 nm, TbFeCo magneto-optical recording film with a thickness of 20 nm and SiN second protecting film with a thickness of 120 nm are formed on the other surface by the sputtering method.

Further, ultraviolet curing resin adhesives are applied 1 $\mu$m onto both the SiN second protecting films, and a glass transparent thin plate with a thickness of 0.6 mm are pasted on both sides to provide an optical information recording medium as shown in FIG. 7.

When, in the optical information recording medium, information is recorded and reproduced by a magneto-optical head with a wavelength of 680 nm and focusing lens N.A. of 0.6, reproducing signals of a recording mark length of 0.5 $\mu$m at the shortest are obtained with low jitter.

[Example 9]

By an original disk manufacturing device in which an ultraviolet laser light source is mounted, a spiral groove with a track pitch of 0.8 $\mu$m and a groove width of 0.4 $\mu$m are formed on a glass original disk. By etching, a spiral groove is with a track pitch of 0.8 $\mu$m and a groove width of 0.4 $\mu$m are formed on the surface of the glass original disk to provide a stamper. Through the stamper, the spiral groove is transferred onto an aluminum alloy substrate (diameter:200 mm, thickness:2.0 mm) by the photopolymer method (2P method).

Then, ZnS-SiO2 first protecting film with a thickness of 120 nm, Si reflecting film with a thickness of 65 nm, ZnS-SiO2 second protecting film with a thickness of 20 nm, GeSbTe phase change recording film with a thickness of 20 nm and ZnS-SiO2 third protecting film with a thickness of 240 nm are formed on the disk substrate, the aluminum alloy substrate, by the sputtering method.

Thereafter, ultraviolet curing resin adhesives are applied 4 mm onto both the ZnS-SiO2 third protecting film of the phase change type optical disk, and a glass transparent thin plate with a thickness of 0.6 mm are pasted thereon to provide an optical information recording medium as shown in FIG. 3.

When, in the optical information recording medium, focusing and tracking servomechanism is tested by an optical head with a wavelength of 680 nm and focusing lens N.A. of 0.6, stable servo-characteristics is obtained at a high-speed revolution of 3600 to show a sufficient mechanical characteristics.

[Example 10]

When, in the phase change type optical disk in Example 9, information is recorded and reproduced by the phase change type optical head with a wavelength of 680 nm and focusing lens N.A. of 0.6, reproducing signals of a recording mark length of 0.45 μm at the shortest are obtained with low jitter.

[Example 11]

The two optical information recording media fabricated in Example 9 are prepared, and their bottom surfaces with no recording film are pasted together by adhesives to provide an optical information recording medium in FIG. 9.

When, in the optical information recording medium, information is recorded and reproduced through the transparent thin plate by the phase change type optical head with a wavelength of 680 nm and focusing lens N.A. of 0.6, reproducing signals of a recording mark length of 0.45 μm at the shortest are obtained with low jitter at both sides.

[Example 12]

By an original disk manufacturing device in which an ultraviolet laser light source is mounted, a spiral groove with a track pitch of 0.8 μm and a groove width of 0.4 μm are formed on a glass original disk. By etching, a spiral groove is with a track pitch of 0.8 μm and a groove width of 0.4 μm are formed on the surface of the glass original disk to provide a stamper. Through the stamper, the spiral groove is transferred onto an aluminum alloy substrate (diameter:200 mm, thickness:2.0 mm) by the photopolymer method (2P method).

Then, ZnS-SiO2 first protecting film with a thickness of 120 nm, Si reflecting film with a thickness of 65 nm, ZnS-SiO2 second protecting film with a thickness of 20 nm, GeSbTe phase change recording film with a thickness of 20 nm and ZnS-SiO2 third protecting film with a thickness of 240 nm are formed on the disk substrate, the aluminum alloy substrate, by the sputtering method.

Thereafter, through a glass original disk stamper, a spiral groove is transferred onto the other surface of the aluminum alloy substrate by the photopolymer method(2P method). Also, ZnS-SiO2 first protecting film with a thickness of 120 nm, Si reflecting film with a thickness of 65 nm, ZnS-SiO2 second protecting film with a thickness of 20 nm, GeSbTe phase change recording film with a thickness of 20 nm and ZnS-SiO2 third protecting film with a thickness of 240 nm are formed on the other surface by the sputtering method.

Further, ultraviolet curing resin adhesives are applied 1.5 μm onto both the ZnS third protecting films, and a glass transparent thin plate with a thickness of 0.6 mm are pasted on both sides to provide an optical information recording medium as shown in FIG. 7.

When, in the optical information recording medium, information is recorded and reproduced through the transparent thin plate by the phase change type optical head with a wavelength of 680 nm and focusing lens N.A. of 0.6, reproducing signals of a recording mark length of 0.45 μm at the shortest are obtained with low jitter at both sides.

[Example 13]

By an original disk manufacturing device in which an ultraviolet laser light source is mounted, a spiral groove with a track pitch of 0.8 μm and a groove width of 0.4 μm are formed on an original disk. After a stamper is made by the nickel-plating method through the original disk, a disk substrate (outer diameter:130 mm, inner diameter:15 mm) on which the spiral groove is transferred by the photopolymer method (2P method) is formed. The thickness of the disk substrate is 1.2 mm.

Then, aluminum alloy reflecting film with a thickness of 120 nm, SiN first protecting film with a thickness of 25 nm, TbFeCo magneto-optical recording film with a thickness of 20 nm and SiN second protecting film with a thickness of 120 nm are formed on the disk substrate by the sputtering method.

Further, ultraviolet curing resin adhesives are applied with a width of 2.0 mm at the outer circumference, a width of 2.5 mm at the inner circumference and a thickness of 100 nm onto the SiN second protecting film, and a PMMA resin transparent thin plate with a thickness of 0.6 mm are pasted thereon to provide an optical information recording medium as shown in FIG. 5. When, in the optical information recording medium, information is recorded and reproduced by a magneto-optical head with a wavelength of 680 nm and focusing lens N.A. of 0.6, reproducing signals of a recording mark length of 0.5 μm at the shortest are obtained with low jitter.

[Example 14]

The two optical information recording media fabricated in Example 13 are prepared, and their bottom surfaces with no recording film are pasted together by adhesives to provide an optical information recording medium in FIG.11.

When, in the optical information recording medium, information is recorded and reproduced through the transparent thin plate by a magneto-optical head with a wavelength of 680 nm and focusing lens N.A. of 0.6, reproducing signals of a recording mark length of 0.5 μm at the shortest are obtained with low jitter at both sides with stable servo-characteristics.

[Example 15]

By an original disk manufacturing device in which an ultraviolet laser light source is mounted, a spiral groove with a track pitch of 0.8 μm and a groove width of 0.4 μm are formed on a glass original disk. By etching, a spiral groove is with a track pitch of 0.8 μm and a groove width of 0.4 μm are formed on the surface of the glass original disk to provide a stamper. Through the stamper, the spiral groove is transferred onto a glass substrate (diameter:130 mm, thickness:1.2 mm) by the photopolymer method (2P method). Then, aluminum alloy reflecting film with a thickness of 120 nm, SiN first protecting film with a thickness of 25 nm, TbFeCo magneto-optical recording film with a thickness of 20 nm and SiN second protecting film with a thickness of 120 nm are formed on the disk substrate by the sputtering method. Thereafter, through a glass original disk stamper, a spiral groove is transferred onto the other surface of the glass substrate by the photopolymer method (2P method). Also, aluminum alloy reflecting film with a thickness of 120 nm, SiN first protecting film with a thickness of 25 nm, TbFeCo magneto-optical recording film with a thickness of 20 nm and SiN second protecting film with a thickness of 120 nm are formed on the other surface by the sputtering method.

Further, ultraviolet curing resin adhesives are applied with a width of 2.0 mm at the outer circumference, a width of 2.5 mm at the inner circumference and a thickness of 100 nm onto both the SiN second protecting films, and a PMMA resin transparent thin plate with a thickness of 0.6 mm are pasted on both sides to provide an optical information recording medium as shown in FIG. 13.

When, in the optical information recording medium, information is recorded and reproduced by a magneto-optical head with a wavelength of 680 nm and focusing lens N.A. of 0.6, reproducing signals of a recording mark length of 0.5μm at the shortest are obtained with low jitter on both sides.

[Comparative Example 1]

On a polycarbonate disk substrate (diameter: 130 mm, thickness:0.6 mm) which has a spiral groove with a track pitch of 0.8 μm and a groove width of 0.4 μm, ZnS-SiO2 first protecting film with a thickness of 240 nm, GeSbTe recording film with a thickness of 20 nm, ZnS-SiO2 second protecting film with a thickness of 20 nm, Si reflecting film with a thickness of 60 nm and ZnS-SiO2 third protecting film with a thickness of 120 nm are formed by the sputtering method.

Thereafter, ultraviolet curing resin adhesives are applied 9 μm onto both the ZnS-SiO2 third protecting film of the phase change type optical disk, and polycarbonate disk substrates with a thickness of 0.6 mm are pasted on both sides to provide an optical information recording medium as shown in FIG. 1.

When, in the optical information recording medium, focusing and tracking servomechanism is tested by a phase change type optical head with a wavelength of 680 nm and focusing lens N.A. of 0.6, unstable servocharacteristics is shown at a high-speed revolution of 2400 rpm and the recording and reproducing result in failure.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

**Claims**

1. An optical information recording medium, comprising:

    a rigid substrate (1);

    a recording film (2) for recording information that is optically detected by laser light,

    a transparent layer thin plate (5) formed on said recording film,

    **characterized in that**

    said recording film is sandwiched between said a first and a second protecting layer,

    said recording film (2), said first and said second protecting layers each are sputtered on said rigid substrate (1), and

    a structure comprising said protecting layer on the recording film (2) and the transparent thin plate (5) that are pasted together by a transparent adhesive layer (4) disposed therebetween.

2. An optical information recording medium, comprising:

    a rigid substrate (1); a reflecting film (6); and

    a transparent layer (5) formed on said reflecting film, **characterized in that**

    said transparent layer is a transparent thin plate (5); concave-convex pits (3) are provided for recording information that is optically detected, said concave-convex pits being formed on said rigid substrate, and said reflecting film being formed on said concave-convex pits; and

said rigid substrate and said transparent thin plate are pasted together through a transparent adhesive layer (4) disposed therebetween.

3. An optical information recording medium according to claim 1 or 2, **characterized in that** said transparent thin plate has a thickness that is 0,4 mm or more and 1,2 mm or less, preferably 0,8 mm or less.

4. An optical information recording medium, comprising:

a rigid substrate (1);

a first recording film (2) for recording information that is optically detected by laser light, said first recording film being formed on one surface of said rigid substrate; and

a first transparent layer (5) formed on said first recording film, **characterized in that**

a second recording film (2a) is provided for recording information that is optically detected by laser light, said second recording film being formed on the other surface of said rigid substrate;

a second transparent layer (5a) is provided formed on said second recording film;

said first and second transparent layers (5, 5a) are first and second transparent thin plates (5, 5a), respectively; and

said rigid substrate and said first and second transparent thin plates are pasted together through respective transparent adhesive layers (4, 4a) disposed therebetween.

5. An optical information recording medium, comprising:

a rigid substrate (1);

a first reflecting film (6);

a first transparent layer (5) formed on said first reflecting film, **characterized in that**

first concave-convex pits (3) are provided for recording information that is optically detected, said first concave-convex pits being formed on one surface of said rigid substrate, and said first reflecting film being formed on said first concave-convex pits;

second concave-convex pits (3a) are provided for recording information that is optically detected, said second concave-convex pits being formed on the other surface of said rigid substrate;

a second reflecting film (6a) is provided being formed on said second concave-convex pits;

a second transparent layer (5a) is provided being formed on said second reflecting film;

said first and second transparent layers (5, 5a) are first and second transparent thin plates (5, 5a), respectively; and

said rigid substrate and said first and second transparent thin plates are pasted together through respective transparent adhesive layers (4, 4a) disposed therebetween.

6. An optical information recording medium, comprising:

a first rigid substrate (1);

a first recording film (2) for recording information that is optically detected by laser light, said first recording film being formed on said first rigid substrate; and

a first transparent layer (5) formed on said first recording film, **characterized in that**

a second rigid substrate (1b) is provided;

a second recording film (2b) is provided for recording information that is optically detected by laser light, said second recording film being formed on said second rigid substrate;

a second transparent layer (5b) is provided being formed on said second recording film;

said first and second transparent layers (5, 5b) are first and second transparent thin plates (5, 5b), respectively;

a surface of said first rigid substrate where said first recording film is not formed and a surface of said second rigid substrate where said second recording film is not formed are pasted together; and

said rigid substrate and said first and second transparent thin plates are pasted together through respective transparent adhesive layers (4, 4b) disposed therebetween.

**7.** An optical information recording medium, comprising:

a first rigid substrate (1); a first reflecting film (6); and

a first transparent layer (5) formed on said first reflecting film, **characterized in that**

first concave-convex pits (3) are provided for recording information that is optically detected, said first concave-convex pits being formed on said first rigid substrate, and said first reflecting film being formed on said first concave-convex pits;

a second rigid substrate (1b) is provided;

second concave-convex pits (3b) are provided for recording information that is optically detected, said second concave-convex pits being formed on said second rigid substrate;

a second reflecting film (6b) is provided being formed on said second concave-convex pits;

a second transparent layer (5b) is provided being formed on said second reflecting film;

said first and second transparent layers (5, 5b) are first and second transparent thin plates (5, 5b), respectively;

a surface of said first rigid substrate where said first concave-convex pits are not formed and a surface of said second rigid substrate where said second concave-convex pits are not formed are pasted together; and

said rigid substrate and said first and second transparent thin plates are pasted together through respective transparent adhesive layers (4, 4b) disposed therebetween.

**8.** An optical information recording medium according to one of claims 4, 5 or 6, **characterized in that** said first and second transparent thin plates have thicknesses that are 0,4 mm or more and 1,2 mm or less, preferably 0,8 mm or less.

**9.** An optical information recording medium, comprising:

a rigid substrate (1);

a recording film (2) for recording information that is optically detected by laser light, and

a transparent layer thin plate (5) formed on said recording film,

**characterized in that**

said recording film is sandwiched between said a first and a second protecting layer,

said recording film (2), said first and said second protecting layers each are formed on said rigid substrate (1) by a film formation method, and

a structure comprising said protecting layer on the recording film (2) and the transparent thin plate (5) that are pasted together by a transparent adhesive layer (4) disposed therebetween.

**10.** An optical information recording medium, according to claim 7, **characterized in that**:

said transparent thin plate has a thickness that is 0.4 or more and 1.2 mm or less, preferably 0.8 mm or less.

**11.** An optical information recording medium, comprising:

a rigid substrate;

first concave-convex pits for recording information that is optically detected, said first concave-convex pits being formed on one surface of said rigid substrate;

first reflecting film formed on said first concave-convex pits;

a first transparent thin plate formed on said first reflecting film;

second concave-convex pits for recording information that is optically detected, said second concave-convex pits being formed on the other surface of said rigid substrate;

second reflecting film formed on said second concave-convex pits;

a second transparent thin plate formed on said second reflecting film.

**12.** An optical information recording medium, according to claim 11, **characterized in that**:

said rigid substrate and said transparent thin plate are pasted together through a transparent adhesive layer disposed therebetween.

**13.** An optical information recording medium, according to claim 11, **characterized in that**:

    said transparent thin plate has a thickness that is 0.4 or more and 1.2 mm or less, preferably 0.8 mm or less.

**14.** An optical information recording medium, comprising:

    a first rigid substrate;

    first recording film for recording information that is optically detected by laser light, said first recording film being formed on said first rigid substrate;

    a first transparent thin plate formed on said first recording film;

    a second rigid substrate; second recording film for recording information that is optically detected by laser light, said second recording film being formed on said second rigid substrate; and

    a second transparent thin plate formed on said second recording film;

    **characterized in that** a surface of said first rigid substrate where said first recording film is not formed and a surface of said second rigid substrate where said second recording film is not formed are pasted together.

**15.** An optical information recording medium, according to claim 14, **characterized in that**:

    said rigid substrate and said transparent thin plate are pasted together through a transparent adhesive layer disposed therebetween.

**16.** An optical information recording medium, according to claim 14, **characterized in that**:

    said transparent thin plate has a thickness that is 0.4 or more and 1.2 mm or less, preferably 0.8 mm or less.

**17.** An optical information recording medium, comprising:

    a first rigid substrate;

    first concave-convex pits for recording information that is optically detected, said first concave-convex pits being formed on said first rigid substrate;

    first reflecting film formed on said first concave-convex pits;

    a first transparent thin plate formed on said first reflecting film;

    a second rigid substrate;

    second concave-convex pits for recording information that is optically detected, said second concave-convex pits being formed on said second rigid substrate;

    second reflecting film formed on said second concave-convex pits;

    and a second transparent thin plate formed on said second reflecting film;

    **characterized in that** a surface of said first rigid substrate where said first concave-convex pits are not formed and a surface of said second rigid substrate where said second concave-convex pits are not formed are pasted together.

**18.** An optical information recording medium, according to claim 16, **characterized in that**:

    said rigid substrate and said transparent thin plate are pasted together through a transparent adhesive layer disposed therebetween.

**19.** An optical information recording medium, according to claim 16, **characterized in that**:

    said transparent thin plate has a thickness that is 0.4 or more and 1.2 mm or less, preferably 0.8 mm or less.

**20.** A method for optically reproducing information, comprising the step of:

    reproducing said information that is optically detectable and is recorded on a rigid substrate, by laser light which incides on said rigid substrate through a transparent thin plate formed on said rigid substrate.

**21.** A method for optically recording, reproducing and erasing information, comprising the step of:

    providing an optical information recording medium in which a recording member that is physically or chemically changed by the incidence of laser light is formed on a rigid substrate;

    **characterized in that** said recording, reproducing and erasing of information is conducted through said recording member by laser light which incides on said rigid substrate through a transparent thin plate formed on said rigid substrate.

# FIG.1 PRIOR ART

11 FOCUSING LENS

10 LASER LIGHT

2 RECORDING FILM

21 THIN SUBSTRATE

4 ADHESIVES

21a THIN SUBSTRATE

2a RECORDING FILM

# FIG.2 PRIOR ART

11 FOCUSING LENS

10 LASER LIGHT

2 RECORDING FILM

21 THIN SUBSTRATE

4 ADHESIVES

21a THIN SUBSTRATE

2a RECORDING FILM

22 REINFORCING PLATE

# FIG.3

11 FOCUSING LENS

10 LASER LIGHT

5 TRANSPARENT THIN PLATE

4 ADHESIVES

2 RECORDING FILM

1 RIGID SUBSTRATE

# FIG.4

11 FOCUSING LENS

3 CONCAVE-CONVEX PIT

10 LASER LIGHT

5 TRANSPARENT THIN PLATE

4 ADHESIVES

6 REFLECTING FILM

1 RIGID SUBSTRATE

14

# FIG.5

4 ADHESIVES

5 TRANSPARENT THIN PLATE

4

11 FOCUSING LENS

10 LASER LIGHT

4

4

2 RECORDING FILM

1 RIGID SUBSTRATE

# FIG.6

4 ADHESIVES

5 TRANSPARENT THIN PLATE

4

11 FOCUSING LENS

10 LASER LIGHT

4

4

6 REFLECTING FILM

3 CONCAVE-CONVEX PIT

1 RIGID SUBSTRATE

# F I G. 7

11 FOCUSING LENS

10 LASER LIGHT

5 TRANSPARENT THIN PLATE

4 ADHESIVES

2 RECORDING FILM

1 RIGID SUBSTRATE

2a RECORDING FILM

4a ADHESIVES

5a TRANSPARENT THIN PLATE

10a LASER LIGHT

11 FOCUSING LENS

# FIG.8

11 FOCUSING LENS

3 CONCAVE-CONVEX PIT

10 LASER LIGHT

5 TRANSPARENT THIN PLATE

4 ADHESIVES

6 REFLECTING FILM

1 RIGID SUBSTRATE

6a REFLECTING FILM

4a ADHESIVES

5a TRANSPARENT THIN PLATE

3a CONCAVE-CONVEX PIT

10a LASER LIGHT

11a FOCUSING LENS

EP 1 184 858 A2

# FIG.9

11 FOCUSING
LENS

10 LASER
LIGHT

5 TRANSPARENT
THIN PLATE

4 ADHESIVES

2 RECORDING
FILM

1 RIGID
SUBSTRATE

7 ADHESIVES

1b RIGID
SUBSTRATE

2b RECORDING
FILM

4b ADHESIVES

5b TRANSPARENT
THIN PLATE

10b LASER
LIGHT

11b FOCUSING
LENS

18

EP 1 184 858 A2

# FIG. 10

11 FOCUSING LENS

3 CONCAVE-CONVEX PIT

10 LASER LIGHT

5 TRANSPARENT THIN PLATE

4 ADHESIVES

6 REFLECTING FILM

1 RIGID SUBSTRATE

7 ADHESIVES

1b RIGID SUBSTRATE

6b REFLECTING FILM

3a CONCAVE-CONVEX PIT

10b LASER LIGHT

11a FOCUSING LENS

4b ADHESIVES

5b TRANSPARENT THIN PLATE

19

# FIG. 11

11 FOCUSING LENS

10 LASER LIGHT

4 ADHESIVES

5 TRANSPARENT THIN PLATE

4

4

4

2 RECORDING FILM

1 RIGID SUBSTRATE

1b RIGID SUBSTRATE

4b

2b RECORDING FILM

10b LASER LIGHT

7 ADHESIVES

4b ADHESIVES

5b TRANSPARENT THIN PLATE

4b

4b

11b FOCUSING LENS

EP 1 184 858 A2

EP 1 184 858 A2

# FIG.12

11 FOCUSING LENS

10 LASER LIGHT

4

3 CONCAVE-CONVEX PIT

7 ADHESIVES

4b

3b CONCAVE-CONVEX PIT

4

4 ADHESIVES

5 TRANSPARENT THIN PLATE

4

6 REFLECTING FILM

1 RIGID SUBSTRATE

1b RIGID SUBSTRATE

6b REFLECTING FILM

4b

4b ADHESIVES

4b

5b TRANSPARENT THIN PLATE

11b FOCUSING LENS

10b LASER LIGHT

# FIG. 13

11 FOCUSING LENS

10 LASER LIGHT

4

4 ADHESIVES

5 TRANSPARENT THIN PLATE

4

2 RECORDING FILM

1 RIGID SUBSTRATE

4b ADHESIVES

5b TRANSPARENT THIN PLATE

4b

4b

4b

2b RECORDING FILM

11b FOCUSING LENS

10b LASER LIGHT

# FIG. 14

11 FOCUSING LENS

10 LASER LIGHT

4 ADHESIVES

5 TRANSPARENT THIN PLATE

4

4

3 CONCAVE-CONVEX PIT

4

6 REFLECTING FILM

1 RIGID SUBSTRATE

4b

6b REFLECTING FILM

3b CONCAVE-CONVEX PIT

4b ADHESIVES

4b

4b

5b TRANSPARENT THIN PLATE

11b FOCUSING LENS

10b LASER LIGHT

EP 1 184 858 A2